# EUROPÄISCHE PATENTSCHRIFT

(11) **EP 1 829 663 B1**
(45) Veröffentlichungstag und Bekanntmachung des Hinweises auf die Patenterteilung: **15.05.2013**
(21) Anmeldenummer: 07006360.7
(22) Anmeldetag: 28.05.2003
(51) Int. Cl.: B29C 45/16, B60K 15/035, F16L 47/20, F16L 47/28

(54) **Bauteil zum Verbinden einer Fluidleitung mit einer Öffnung eines Kunststoffbehälters**
Component for connecting a fluid duct to an opening on a plastic container
Composant destiné à la liaison d'une conduite de fluide avec une ouverture d'un récipient en plastique

(30) Priorität: 03.09.2002 DE 10241286
(43) Veröffentlichungstag der Anmeldung: 05.09.2007
(62) Teilanmeldung aus: 03011989.5
(73) Patentinhaber: NORMA Germany GmbH, 63477 Maintal (DE)
(72) Erfinder: Kertesz, Janos, 65719 Hofheim (DE)
(74) Vertreter: Knoblauch, Andreas

(56) Entgegenhaltungen:
- EP-A- 1 063 078
- EP-A- 1 095 962
- EP-A- 1 233 174
- DE-A- 10 048 973
- DE-A- 10 062 997
- US-A- 5 798 048
- US-A1- 2001 050 478

## Beschreibung

Die Erfindung bezieht sich auf ein Bauteil zum Verbinden einer Fluidleitung mit einer Öffnung eines überwiegend aus thermoplastischem Kunststoff, insbesondere Polyolefin, bestehenden Behälters oder zum Verschließen der Öffnung, wobei das Bauteil wenigstens eine erste und eine zweite Komponente aus überwiegend thermoplastischem Kunststoff aufweist, das Material der ersten Komponente mit dem Material des Behälters eine Schmelzverbindung durch Schweißen eingeht, aber keine hinreichende Diffusionssperrfähigkeit gegenüber Kohlenwasserstoffen, wie Benzin oder Dieselöl, aufweist und das Material der zweiten Komponente eine erheblich höhere Diffusionssperrfähigkeit und geringere Quellfähigkeit gegenüber Kohlenwasserstoffen und eine höhere mechanische Festigkeit, auch nach einer Kohlenwasserstoff-Einwirkung, sowie eine höhere Formbeständigkeit in der Wärme als das Material der ersten Komponente hat, wobei das Bauteil wenigstens eine erste und eine zweite überwiegend aus thermoplastischem Kunststoff bestehende Komponente aufweist, das Material der ersten Komponente mit dem Material des Behälters eine Schmelzverbindung durch Schweißen eingeht, aber keine hinreichende Diffusionssperrfähigkeit gegenüber Kohlenwasserstoffen, wie Benzin oder Dieselöl, aufweist und das Material der zweiten Komponente eine höhere Diffusionssperrfähigkeit und geringere Quellfähigkeit gegenüber Kohlenwasserstoffen und eine höhere mechanische Festigkeit, auch nach einer Kohlenwasserstoff-Einwirkung, sowie eine höhere Formbeständigkeit in der Wärme als das Material der ersten Komponente hat, wobei das Material der zweiten Komponente die erste Komponente wenigstens bis zu einer Einspritzstelle einschließt, die einer am Behälter anzuschweißenden Fläche des Bauteils in möglichst großer bis größtmöglicher Entfernung abgekehrt ist und über die Material der ersten Komponente durch die noch plastische Seele des Materials der zweiten Komponente hindurch bis zu der am Behälter anzuschweißenden Fläche eingespritzt worden ist, wobei das Bauteil weitgehend rohrförmig ist, das Material der ersten Komponente den größten Teil der Länge der Rohrwand ausfüllt, und sich das Material der ersten Komponente von einem die anzuschweißende Fläche aufweisenden Ringteil der ersten Komponente bis zu dem dieser Fläche abgekehrten Ende des rohrförmigen Bauteils erstreckt.

Bei einem aus der DE 100 62 997 A1 bekannten Bauteil dieser Art, einem rohrartigen Stutzen, enthält die erste Komponente Polyethylen (PE), insbesondere hochdichtes Polyethylen (HDPE), und die zweite Komponente Polyamid (PA). Ein von dem Behälter, an dem der Rohrstutzen angeschweißt werden soll, entfernt liegender Abschnitt der ersten Komponente ist von dem Material der zweiten Komponente umspritzt. Ein Ringteil der ersten Komponente wird am Behälter angeschweißt. Der Behälter enthält ebenfalls im wesentlichen HDPE. Er geht daher bei der Verschweißung eine Schmelzverbindung mit der ersten Komponente ein. Das Polyamid der zweiten Komponente hat eine hohe Diffusionssperrfähigkeit und geringe Quellfähigkeit gegenüber Kraftstoffen, wie Benzin oder Dieselöl, und darüber hinaus eine hohe mechanische Festigkeit. In dem von der zweiten Komponente umspritzten Bereich der ersten Komponente ist der Rohrstutzen mithin weitgehend undurchlässig gegenüber ein Hindurchdiffundieren von Kraftstoffen. Obwohl die Materialien der beiden Komponenten in ihrem Überlappungsbereich durch Brückenbildung eine innige Schmelzverbindung eingehen, kann dennoch der Fall auftreten, dass im Überlappungsbereich zwischen den beiden Komponenten eine Leckage auftritt, bei der Kraftstoff entlang der Verbindungsfläche der Komponenten austritt, weil die Verbindungsfläche über ihren inneren Rand hinweg dem Kraftstoff unmittelbar ausgesetzt ist und wegen der höheren Quellfähigkeit des Materials der ersten Komponente als das der zweiten Komponente zur Rissbildung neigt. Darüber hinaus kann der Kraftstoff durch das Ringteil hindurchdiffundieren.

DE 100 48 973 A1 offenbart einen Kunststofffitting, wobei eine erste Komponente, die ein schweißbares Material aufweist, in eine noch plastische zweite Komponente, die ein Material mit hoher Diffusionssperrfähigkeit aufweist, eingespritzt wird. Bei diesem Bauteil wird eine anzuschweißende Fläche durch einen Ringteil gebildet, von dem ausgehend sich ein rohrförmiger Fortsatz erstreckt. Der Fortsatz wird bei montiertem Bauteil innerhalb eines Behälters aufgenommen werden. Dabei dient er zur Zentrierung des Bauteils innerhalb einer Öffnung des Behälters und möglicherweise dazu, bis zum Boden des Behälters zu reichen.

Der Erfindung liegt die Aufgabe zugrunde, ein Bauteil der eingangs genannten Art anzugeben, bei dem ein Austritt von Kraftstoff in höherem Maße verhindert wird.

Die Aufgabe wird durch ein Bauteil mit den Merkmalen des Anspruchs 1 gelöst.

Bei dieser Lösung ist es möglich, dass kein oder allenfalls ein Rand der Verbindungsfläche beider Komponenten dem Kraftstoff unmittelbar ausgesetzt ist. Eine Leckage entlang der Verbindungsflächen ist daher weitgehend bis völlig vermeidbar. Wenn der Abstand zwischen der am Behälter anzuschweißenden Fläche und der Einspritzstelle dem maximal möglichen entspricht, wird eine Leckage wegen des entsprechend langen Weges, den der Kohlenwasserstoff über die Verbindungsfläche zurücklegen müsste, verhindert. Dieser Weg wird außerdem durch eine Welligkeit der Verbindungsfläche, wie sie durch das Einspritzen an den Berührungsflächen der noch plastischen Materialien beider Komponenten hervorgerufen wird, nach Art einer Labyrinth-Dichtung verlängert. Die Welligkeit ergibt zugleich eine formschlüssige Verbindung. Sodann ist die Sperrfähigkeit im Überlappungsbereich der beiden Komponenten gegen ein Hindurchdiffundieren von Kraftstoffen weiterhin hoch, weil das Hindurchdiffundieren durch die nahezu diffusionsdichte zweite Komponente weitgehend verhindert wird. Außerdem ist die mechanische Festigkeit und Wärme-Formbeständigkeit im Überlappungsbereich sehr hoch. Darüber hinaus ermöglicht das Einspritzen des Materials der einen Komponente in die noch plastische Seele der anderen Komponente die Herstellung des Bauteils in demselben Formwerkzeug.

Das Material der ersten Komponente erstreckt sich nun von einem die anzuschweißende Fläche aufweisenden Ringteil der ersten Komponente bis zu dem dieser Fläche abgekehrten Ende des rohrförmigen Bauteils.

Es ist dafür gesorgt, dass die erste Komponente eine dritte Komponente einschließt, durch die wenigstens eine der Eigenschaften Festigkeit, Diffusionssperrfähigkeit und Wärme-Formbeständigkeit des Bauteils erhöht wird. Diese dritte Komponente kann ebenfalls dadurch in der ersten Komponente angeordnet werden, dass ihr Material in die noch plastische Seele der ersten Komponente eingespritzt wird. Auch dies kann in demselben Formwerkzeug erfolgen, in dem die erste und zweite Komponente geformt werden.

Dabei kann das Ringteil zwischen sich und einem koaxialen rohrförmigen Fortsatz des Bauteils eine koaxiale Ringnut begrenzen, wobei die axiale Dicke des Ringteils und die Tiefe der Ringnut können so gewählt ist, dass die Dicke nach dem Anschweißen jener Fläche am Behälter wegen der teilweise seitlich ausweichenden Schmelze des Ringteils erheblich geringer als vor dem Anschweißen ist, aber der Boden der Ringnut weiterhin einen Abstand von dem Behälter aufweist. Beim Anschweißen des Ringteils am Behälter verringert sich mithin die Dicke des Ringteils durch die seitlich ausweichende Schmelze des Ringteils, so dass die einem Hindurchdiffundieren des Kraftstoffs nach dem Anschweißen noch verbleibende Ringfläche in der Ringnut sehr gering ist, aber dennoch das Material der zweiten Komponente eingeschlossen bleibt.

Vorzugsweise ist dafür gesorgt, dass das Bauteil weitgehend rohrförmig ist und das Material der ersten Komponente den größten Teil der Länge der Rohrwand ausfüllt. Dementsprechend ist das Bauteil über nahezu seine gesamte Länge ebenso diffusionsdicht und Stabil wie das Material der zweiten Komponente.

Dies ist besonders dann der Fall, wenn das Material der ersten Komponente einen der am Behälter anzuschweißenden Fläche abgekehrten Endabschnitt des rohrförmigen Bauteils bildet.

Das Material der ersten Komponente kann ein Polyolefin, insbesondere ein funktionalisiertes PE, aufweisen, das mit dem Material des Behälters verschmelzbar ist.

Dagegen kann die zweite Komponente wenigstens eines der Materialien EVOH, PA, POM, PEN, PBT, PET, PBN, LCP, PPS, PPA, PP, aliphatisches Polyketon und Fluorthermoplast aufweisen. Die Materialien EVOH, PA und PP gehen zumindest mit dem funktionalisierten PE der einen Komponente beim Einspritzen des Materials der anderen Komponente in das der ersten Komponente eine Schmelzverbindung ein, die nicht nur stoffschlüssig, sondern auch formschlüssig ist. Für diese und die übrigen Materialien gilt das gleiche für praktisch alle Polyolefine und/oder Copolymere nach entsprechender Modifikation.

Die dritte Komponente kann überwiegend eines der Materialien EVOH, PA, POM, PEN, PBT, PET, PBN, LCP, PPS, PPA, aliphatisches Polyketon und Fluorthermoplast aufweisen, so dass die Eigenschaften Festigkeit, Diffusionssperrfähigkeit und Wärme-Formbeständigkeit des Bauteils verbessert werden.

Wenigstens die erste Komponente kann, in an sich bekannter Weise (DE 38 28 696 A1), einen elektrisch leitfähigen Zusatz aufweisen, so dass sich das Bauteil durch einen sich an einer Fläche des Bauteils entlang bewegenden Kraftstoff, insbesondere beim Hindurchleiten von Kraftstoff durch ein rohrförmig ausgebildetes Bauteil, nicht elektrostatisch auflädt und das Entzünden des Kraftstoffs durch eine Funkenentladung in dem Bauteil vermieden wird.

Das Bauteil kann im Querschnitt weitgehend U- oder trapezförmig sein, so dass es als Verschluss (Deckel oder Stopfen) für die Behälteröffnung dienen kann.

An einem derart geformten Bauteil kann wenigstens ein weiteres Funktionsteil angespritzt sein, z.B. ein Halterungs-Clip, der z.B. zur Halterung einer Fluidleitung oder eines elektrischen Kabels dienen kann.

Das Bauteil wird nachstehend anhand der beiliegenden Zeichnungen verschiedener Ausführungsbeispiele näher beschrieben. Darin stellen dar:
- Fig. 1: einen Axialschnitt durch ein rohrförmiges Bauteil in einer Lage, in der es an einer Öffnung eines Behälters angeschweißt wird, um eine nicht dargestellte Fluidleitung mit der Behälteröffnung zu verbinden,
- Fig. 2: ein zweites Ausführungsbeispiel eines Bauteils im Axialschnitt in der gleichen Lage wie das Bauteil nach Fig. 1,
- Fig. 3: ein drittes Ausführungsbeispiel eines Bauteils im Axialschnitt in der gleichen Lage wie das Bauteil nach Fig. 1,
- Fig. 4: ein Ausführungsbeispiel eines Bauteils im Axialschnitt in der gleichen Lage wie das Bauteil nach Fig. 1 und
- Fig. 5: ein weiteres Ausführungsbeispiel eines Bauteils im Axialschnitt in der gleichen Lage wie das Bauteil nach Fig. 1.

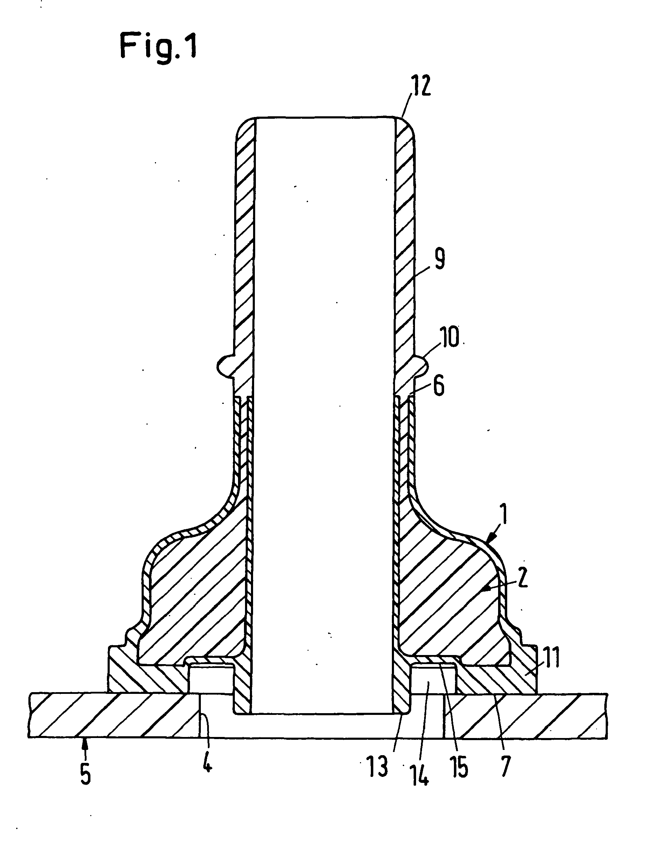

Die Ausführungsbeispiele, die in den Figuren 1, 2 und 4 dargestellt sind, dienen nur der Veranschaulichung. Das in Fig. 1 dargestellte Bauteil stellt einen rohrförmigen Stutzen dar, der aus zwei Komponenten 1 und 2 besteht und am Rande einer Öffnung 4 eines Behälters 5 angeschweißt wird, von dem nur ein Teil seiner Wand dargestellt ist. Der Behälter 5 dient zur Aufnahme des Kraftstoffs, insbesondere Benzin oder Dieselöl, eines Kraftfahrzeugs und der Rohrstutzen zum Verbinden einer nicht dargestellten Fluidleitung mit der Öffnung 4 des Behälters, über die der Behälter mit Kraftstoff gefüllt wird.

Der Behälter 5 ist in der Regel mehrschichtig, wobei seine äußere Schicht aus HDPE und eine mittlere Schicht aus einem Material besteht, das keinen Kraftstoff hindurchdiffundieren lässt.

Die Materialien der ersten Komponente 1 und der zweiten Komponente 2 enthalten überwiegend thermoplastischen Kunststoff. Das Material der ersten Komponente 1 ist so gewählt, das es mit dem Material des Behälters 5 eine Schmelzverbindung durch Reibschweißen oder Spiegelschweißen eingeht. Gegebenenfalls hat es keine hinreichende Diffusionssperrfähigkeit gegenüber Kohlenwasserstoffen, wie Benzin oder Dieselöl. Außerdem hat es eine relativ geringe mechanische Festigkeit, weshalb es mitunter eine Verstärkung aufweist. Ferner hat es eine relativ hohe Quellfähigkeit gegenüber Kohlenwasserstoffen, wie Benzin oder Dieselöl. So weist die erste Komponente 1 ein Polyolefin, insbesondere ein funktionalisiertes PE (Polyethylen) auf, das mit dem Material des Behälters 5 verschmelzbar ist.

Das Material der zweiten Komponente 2 hat eine erheblich höhere Diffusionssperrfähigkeit und geringere Quellfähigkeit gegenüber Kohlenwasserstoffen der genannten Art und eine höhere mechanische Festigkeit, auch nach einer Kohlenwasserstoff-Einwirkung, sowie eine höhere Formbeständigkeit in der Wärme als das Material der ersten Komponente 1.

Vorzugsweise enthält die zweite Komponente 2 wenigstens eines der Materialien EVOH (Ethylenvenylalkohol), PA (Polyamid), POM (Polyoxymethylen), PBT (Polybutylenterephthalat), PET (Polyethylenterephthalat), PEN (Polyethylennaphthalat), PBN (Polybutylennaphthalat), LCP (Liquid Crystalline Polymer, d.h. flüssigkristallines Polymer), PPS (Polyphenylensulfid), PPA (Polyphthalamid, d.h. ein partiell aromatisches Polyamid), PP (Polylpropylen), aliphatisches Polyketon und Fluorthermoplast.

Das rohrförmige Bauteil wird in der Weise hergestellt, dass das Material der ersten Komponente 1 die zweite Komponente 2 wenigstens bis zu einer Einspritzstelle 6 einschließt. Diese Einspritzstelle 6 ist einer am Behälter 5 anzuschweißenden Fläche 7 des Bauteils abgekehrt und hat von dieser einen relativ großen Abstand, der hier etwa der halben Länge des Rohrstutzens entspricht, vorzugsweise noch größer ist. Zunächst wird das Material der erste Komponente 1 in eine Kavität eines Formwerkzeugs eingespritzt, und bevor es vollständig ausgehärtet ist, wird in die noch plastische Seele des Materials der ersten Komponente 1 das Material der zweiten Komponente 2 an der Einspritzstelle 6 eingespritzt. Danach wird in einem weiteren Formwerkzeugteil ein der Fläche 7 abgekehrter Endabschnitt 9 mit einer in der Nähe der Einspritzstelle 6 liegenden Halterippe 10 von der Einspritzstelle 6 aus angespritzt. Die Fluidleitung wird über die Halterippe und über die Einspritzstelle 6 hinweg auf den Stutzen aufgeschoben und mittels einer Schlauchschelle hinter der Halterippe 10 festgeklemmt. Nach dem Aushärten und Entformen hat das Bauteil die dargestellte Form mit einem die anzuschweißende Fläche 7 aufweisenden Ringteil 11 der ersten Komponente 1, wobei sich das Material der zweiten Komponente 2 von dem Ringteil 11 bis zu dem der Fläche 7 abgekehrten Ende 12 des Bauteils erstreckt.

Das Ringteil 11 begrenzt zwischen sich und einem koaxialen rohrförmigen Fortsatz 13, der zur Zentrierung beim Anschweißen des Bauteils am Behälter 5 in die Öffnung 4 ragt, eine koaxiale Ringnut 14, wobei die axiale Dicke des Ringteils 11 und die Tiefe der Ringnut 14 so gewählt sind, dass die Dicke nach dem Anschweißen der Fläche 7 am Behälter 5 wegen der teilweise seitlich in die Ringnut 14 und nach außen ausweichenden Schmelze des Ringteils 11 erheblich geringer ist, aber der Boden 15 in der Ringnut 14 weiterhin einen Abstand vom Behälter 5 aufweist, der etwa der verbliebenen axialen Dicke des Ringteils 11 entspricht.

Das Material der Komponente 1 schließt mithin die Komponente 2 bis zur Einspritzstelle 6 vollständig ein und bildet anschließend zwischen der Einspritzstelle 6 und dem Ende 12 einen Endabschnitt 9, der nur aus dem Material der Komponente 2 besteht. Das Material der Komponente 1 hat zwar eine erheblich geringere Diffusionssperrfähigkeit als das Material der Komponente 2, doch kann es nur noch durch das nach dem Anschweißen der Fläche 7 am Behälter 5 erheblich flachere Ringteil 11 hindurchdiffundieren. Selbst wenn theoretisch ein Leckagepfad entlang der Grenz- oder Verbindungsfläche zwischen den beiden Komponenten 1 und 2 vom radial inneren Ende der Einspritzstelle 6 bis zum radial äußeren Ende der Einspritzstelle 6 auftreten sollte, wenn die Materialien der beiden Komponenten 1 und 2 nicht durchgehend über die gesamte Grenzfläche innig verschmolzen wären, wäre der Leckagepfad sehr lang, zumal die Grenzfläche beim Einspritzen des Materials der Komponente 2 in die noch plastische Seele der Komponente 1 aufgrund einer unterschiedlichen Dichte der beiden Materialien gewellt wird oder sich durch Wirbelbildung kräuselt, so dass der Leckagepfad tatsächlich erheblich länger als dargestellt wäre und die Grenzfläche eine Art Labyrinthdichtung bildet, über die mithin tatsächlich kein Kraftstoff durch Leckage austreten könnte. Hinzu kommt, dass eine auf dem Rohrstutzen festgeklemmte Fluidleitung, zum Beispiel ein Schlauch aus elastischem Material, die Einspritzstelle 6 dicht abdeckt. Da das Material der Komponente 2 eine hohe Formbeständigkeit in der Wärme, eine hohe mechanische Festigkeit und eine geringe Quellfähigkeit aufweist, gelten diese Eigenschaften im wesentlichen auch für das gesamte Bauteil, da das Material der zweiten Komponente den größten Teil des Gesamtvolumens des Bauteils ausfüllt. Zusätzlich zu der stoffschlüssigen Verbindung zwischen den Komponenten 1 und 2 bewirkt die Welligkeit ihrer Grenzfläche auch eine feste Formschlussverbindung.

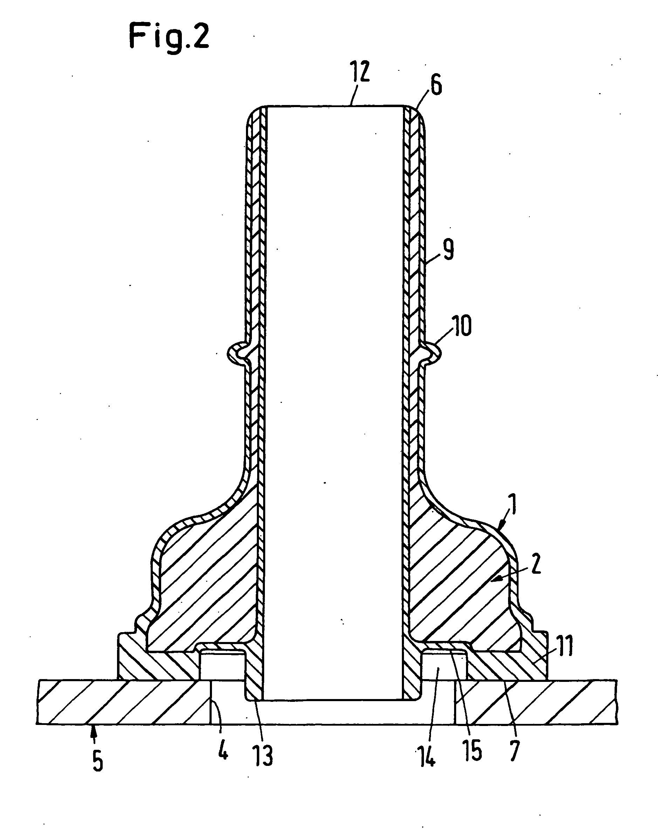

Das Ausführungsbeispiel nach Fig. 2 unterscheidet sich von dem nach Fig. 1 nur dadurch, dass sich das Material der Komponente 1 über die gesamte Länge des rohrförmigen Bauteils erstreckt und das Material der Komponente 2 bis zum Ende 12 einschließt, wobei die Einspritzstelle 6 mit dem der Fläche 7 des Ringteils 11 abgekehrten Ende 12 zusammenfällt. Hierbei wäre ein theoretischer Leckagepfad in Axialrichtung um die gesamte Komponente 2 herum sehr viel länger als bei dem ersten Ausführungsbeispiel nach Fig. 1, abgesehen davon, dass eine auf dem Rohrstutzen festgeklemmte Fluidleitung den Austritt eines Fluids verhindern würde.

Im übrigen hat das zweite Ausführungsbeispiel die gleichen Vorteile wie das erste Ausführungsbeispiel, abgesehen von einer etwas dünneren Wanddicke der Komponente 2 im Endabschnitt 9, die jedoch ebenso gewählt werden könnte, wie die Wanddicke des Endabschnitts 9 bei dem ersten Ausführungsbeispiel nach Fig. 1.

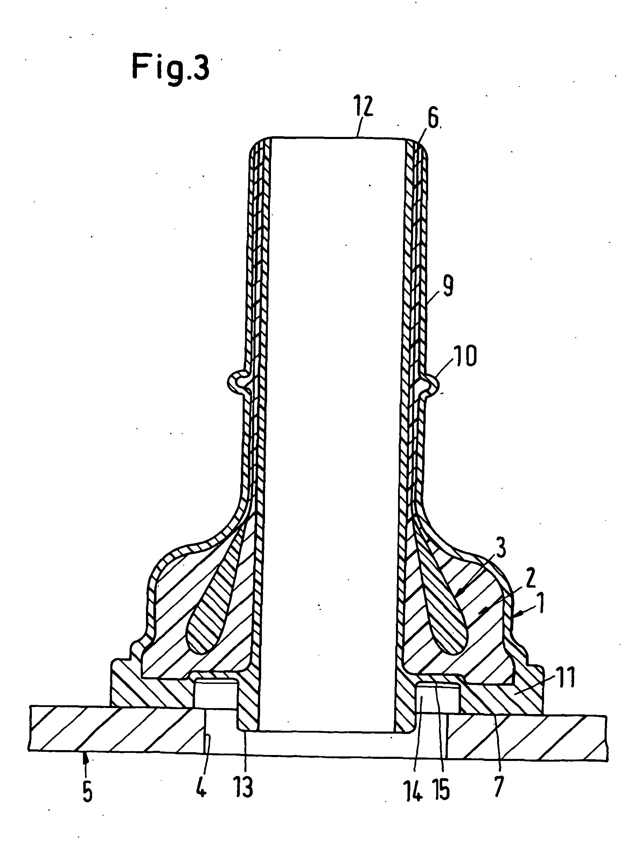

Das dritte Ausführungsbeispiel nach Fig. 3 unterscheidet sich von dem zweiten Ausführungsbeispiel nach Fig. 2 nur dadurch, dass in die zweite Komponente 2 noch eine dritte Komponente 3 ebenfalls von der Einspritzstelle 6 der zweiten Komponente 2 aus - nach dem Einspritzen des Materials der Komponente 2 in die noch plastische Seele des Materials der Komponente 1 von der mit dem Ende 12 zusammenfallenden Einspritzstelle 6 aus - in die noch plastische Seele des Materials der Komponente 2 eingespritzt wurde und hierbei einen erheblichen Teil des Volumens der Komponente 2 bis nahe an das Ringteil 11 bzw. den Boden 15 der Ringnut 14 ausfüllt. Das Material der Komponente 3 ist hierbei so gewählt, dass es wenigstens eine der Eigenschaften Festigkeit, Diffusionssperrfähigkeit und Wärme-Formbeständigkeit des Bauteils erhöht. Zu diesem Zweck kann die dritte Komponente 3 überwiegend eines der Materialien EVOH, PA, POM, PEN, PBT, PET, PBN, LCP, PPS, PPA, aliphatisches Polyketon und Fluorthermoplast aufweisen.

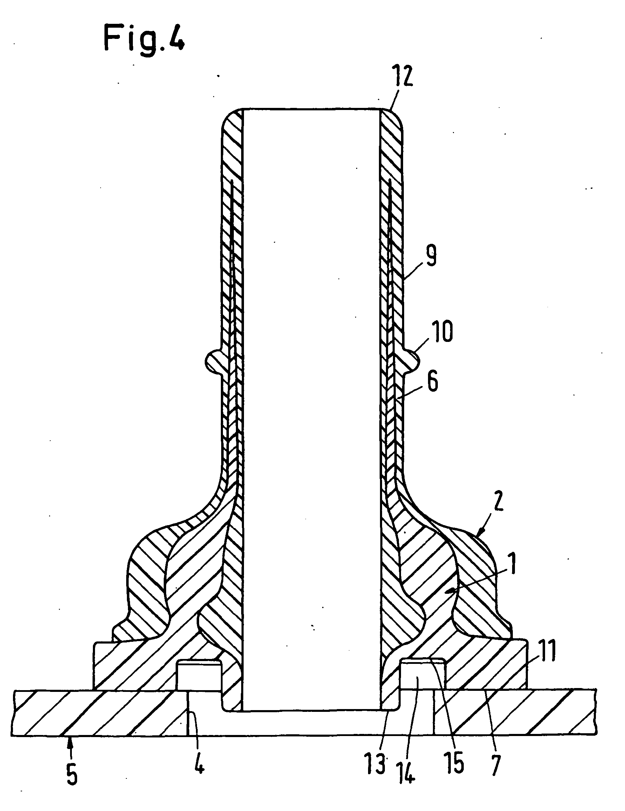

Das Ausführungsbeispiel nach Fig. 4 unterscheidet sich von dem nach den Fig. 1 und 2 im wesentlichen dadurch, dass das Material der Komponente 1, bei dem es sich um das gleiche wie bei den Ausführungsbeispielen nach den Fig. 1 und 2 handelt, über die Einspritzstelle 6 durch die noch plastische Seele des Materials der Komponente 2, bei dem es sich ebenfalls um das gleiche Material wie das der Komponente 2 der Ausführungsbeispiele nach den Fig. 1 und 2 handelt, bis zur Fläche 7 hindurch und auch in den größten Teil des Abschnitts 9 gespritzt ist. Das weitgehend diffusionsdichte und widerstandsfähigere Material der Komponente 2 erstreckt sich hier mithin über den größten Teil der Länge des rohrförmigen Bauteils sowie über die Komponente 1. Die Komponente 1 bildet dagegen weiterhin das Ringteil 11, das mit dem Material des Behälters 5 eine Schmelzverbindung eingeht. Dieses Ausführungsbeispiel hat mithin im wesentlichen die gleichen Vorteile wie das in Fig. 2 dargestellte.

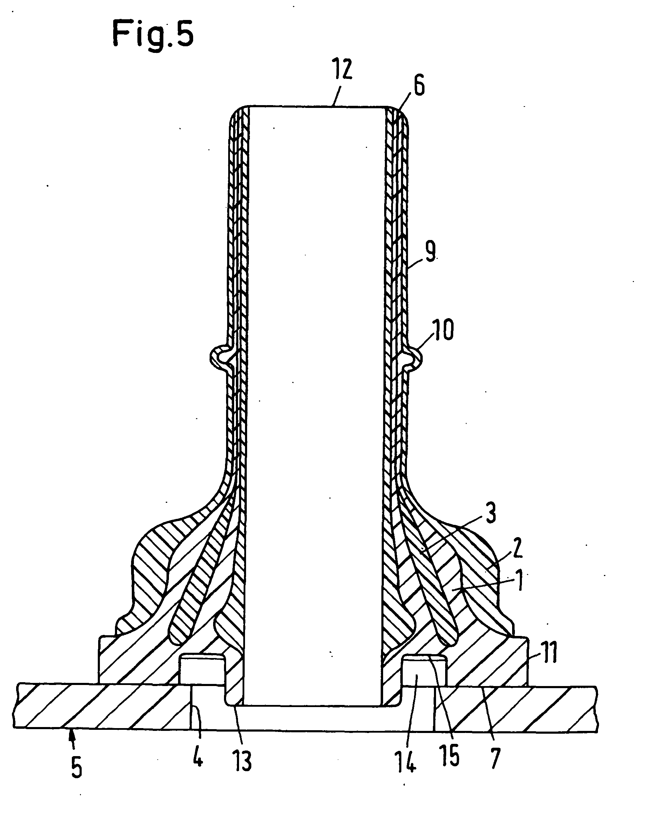

Das fünfte Ausführungsbeispiel nach Fig. 5 unterscheidet sich von dem dritten nach Fig. 3 im wesentlichen nur dadurch, dass die dritte Komponente 3 in die noch plastische Seele des Materials der Komponente 1 statt in die des Materials der Komponente 2, wie im dritten Ausführungsbeispiel, von der am Ende 12 liegenden Einspritzstelle 6 her eingespritzt worden ist, nachdem das Material der Komponente 1 über die am Ende 12 liegende Einspritzstelle 6 durch die noch plastische Seele des Materials der Komponente 2 bis zur Fläche 7 hindurch gespritzt wurde. Auch bei diesem fünften Ausführungsbeispiel bestehen die Materialien der Komponenten 1 bis 3 jeweils aus den gleichen Materialien wie die der Komponenten 1 bis 3 des dritten Ausführungsbeispiels. Das fünfte Ausführungsbeispiel hat mithin im wesentlichen die gleichen Vorteile wie das dritte Ausführungsbeispiel.

Vorzugsweise hat die erste Komponente 1 bei allen Ausführungsbeispielen einen elektrisch leitfähigen Zusatz. Aber auch die Komponenten 2 und 3 können einen elektrisch leitfähigen Zusatz aufweisen. In allen Fällen kann es sich bei diesem Zusatz um Graphitteilchen, Kohlenstofffasern oder Eisenteilchen, insbesondere faserförmige Eisenteilchen, handeln. Durch den elektrisch leitfähigen Zusatz wird eine elektrische Aufladung durch eine Relativbewegung zwischen dem Kraftstoff und dem rohrförmigen Bauteil und damit die Gefahr einer Funkenentladung und Entzündung des Kraftstoffs vermieden.

Elektrisch leitfähige Fasern bewirken gleichzeitig eine Verstärkung des Materials der betreffenden Komponente. Anstelle leitfähiger Faserteile oder zusätzlich können aber auch Verstärkungsteilchen aus Kunststoff, Glas oder Mineralpartikeln verwendet werden.

Anstelle des dargestellten rohrförmigen Bauteils bzw. Stutzens kann ein Bauteil mit einem weitgehend U- oder trapezförmigen Querschnitt als Deckel oder Stopfen vorgesehen sein, der zum Verschließen einer Blindöffnung oder dergleichen im Behälter dient. Die Einspritzstelle der zweiten und gegebenenfalls dritten Komponente würde dann vorzugsweise in der Mitte der Außenseite des Bauteils liegen. An dem U- oder trapezförmigen Bauteil kann darüber hinaus ein weiteres Funktionsteil angespritzt sein, z.B. ein Halterungs-Clip für eine Fluidleitung oder ein elektrisches Kabel.

## Patentansprüche

1. Bauteil zum Verbinden einer Fluidleitung mit einer Öffnung (4) eines überwiegend aus thermoplastischem Kunststoff, insbesondere Polyolefin, bestehenden Behälters (5) oder zum Verschließen der Öffnung (4), wobei das Bauteil wenigstens eine erste und eine zweite überwiegend aus thermoplastischem Kunststoff bestehende Komponente (1, 2) aufweist, das Material der ersten Komponente (1) mit dem Material des Behälters eine Schmelzverbindung durch Schweißen eingeht, aber keine hinreichende Diffusionssperrfähigkeit gegenüber Kohlenwasserstoffen, wie Benzin oder Dieselöl, aufweist und das Material der zweiten Komponente (2) eine erheblich höhere Diffusionssperrfähigkeit und geringere Quellfähigkeit gegenüber Kohlenwasserstoffen und eine höhere mechanische Festigkeit, auch nach einer Kohlenwasserstoff-Einwirkung, sowie eine höhere Formbeständigkeit in der Wärme als das Material der ersten Komponente (1) hat, wobei das Material der zweiten Komponente (2) die erste Komponente (1) wenigstens bis zu einer Einspritzstelle (6) einschließt, die einer am Behälter (5) anzuschweißenden Fläche (7) des Bauteils in möglichst großer bis größtmöglicher Entfernung abgekehrt ist und über die Material der ersten Komponente (1) durch die noch plastische Seele des Materials der zweiten Komponente (2) hindurch bis zu der am Behälter (5) anzuschweißenden Fläche (7) eingespritzt worden ist, wobei das Bauteil weitgehend rohrförmig ist und das Material der ersten Komponente (1) den größten Teil der Länge der Rohrwand ausfüllt, wobei sich das Material der ersten Komponente (1) von einem die anzuschweißende Fläche (7) aufweisenden Ringteil (11) der ersten Komponente (1) bis zu dem dieser Fläche (7) abgekehrten Ende (12) des rohrförmigen Bauteils erstreckt, **dadurch gekennzeichnet, dass** die erste Komponente (1) eine dritte Komponente (3) einschließt, durch die wenigstens eine der Eigenschaften Festigkeit, Diffusionssperrfähigkeit und Wärme-Formbeständigkeit des Bauteils erhöht wird.

2. Bauteil nach Anspruch 1, **dadurch gekennzeichnet, dass** das Material der ersten Komponente (1) in einen der am Behälter anzuschweißenden Fläche (7) abgekehrten Endabschnitt (9) des rohrförmigen Bauteils eingespritzt ist.

3. Bauteil nach Anspruch 1 oder 2, **dadurch gekennzeichnet, dass** das Ringteil (11) zwischen sich und einem koaxialen rohrförmigen Fortsatz (13) des Bauteils eine koaxiale Ringnut (14) begrenzt und die axiale Dicke des Ringteils (11) und die Tiefe der Ringnut (14) so gewählt sind, dass die Dicke nach dem Anschweißen jener Fläche (7) am Behälter (5) wegen der teilweise seitlich ausweichenden Schmelze des Ringteils (11) erheblich geringer ist, aber der Boden der Ringnut (14) weiterhin einen Abstand von dem Behälter (5) aufweist.

4. Bauteil nach einem der Ansprüche 1 bis 3, **dadurch gekennzeichnet, dass** die erste Komponente (1) ein Polyolefin, insbesondere ein funktionalisiertes PE, aufweist, das mit dem Material des Behälters verschmelzbar ist.

5. Bauteil nach einem der Ansprüche 1 bis 4, **dadurch gekennzeichnet, dass** die zweite Komponente (2) wenigstens eines der Materialien EVOH, PA, POM, PEN, PBT, PET, PBN, LCP, PPS, PPA, PP, aliphatisches Polyketon und Fluorthermoplast aufweist.

6. Bauteil nach einem der Ansprüche 1 bis 5, **dadurch gekennzeichnet, dass** wenigstens die erste Komponente (1) einen elektrisch leitfähigen Zusatz aufweist.

7. Bauteil zum Verschließen der Öffnung des Behälters nach einem der Ansprüche 1 bis 6, **dadurch gekennzeichnet, dass** das Bauteil im Querschnitt weitgehend U- oder trapezförmig ist.

8. Bauteil nach Anspruch 7, **dadurch gekennzeichnet, dass** wenigstens ein weiteres Funktionsteil an dem Bauteil angespritzt ist, z.B. ein Halterungs-Clip.

## Claims

1. Part for connecting a fluid line to an opening (4) of a container (5) which consists predominantly of thermoplastic material, in particular polyolefin, or for closing the opening (4), the part comprising at least a first and a second component (1, 2) which consist predominantly of thermoplastic material, the material of the first component (1) forming with the material of the container a fused joint by welding, but having insufficient diffusion barrier capability with respect to hydrocarbons, such as petrol or diesel oil, and the material of the second component (2) having, in comparison to the material of the first component (1), a significantly higher diffusion barrier capability, a reduced swelling capability with respect to hydrocarbons, a higher mechanical strength, even after hydrocarbon exposure, and a higher dimensional stability under heat, the material of the second component (2) enclosing the first component (1) at least up to an injection location (6) which is remote from a surface (7) of the part, which surface is to be welded to the container (5), at a distance that is as large as possible or a greatest possible distance and via which material of the first component (1) has been injected through the still plastic core of the material of the second component (2) to the surface (7) to be welded to the container (5), the part being largely tubular and the material of the first component (1) filling most of the length of the tube wall, the material of the first component (1) extending from an annular member (11), comprising the surface (7) to be welded, of the first component (1) to the end (12) of the tubular part, which end is remote from this surface (7), **characterised in that** the first component (1) encloses a third component (3) which increases at least one of the following properties of the part: strength, diffusion barrier capability and dimensional stability under heat.

2. Part according to claim 1, **characterised in that** the material of the first component (1) is injected into an end portion (9) of the tubular part, which end portion is remote from the surface (7) to be welded to the container.

3. Part according to either claim 1 or claim 2, **characterised in that** the annular member (11) defines between itself and a coaxial tubular projection (13) of the part a coaxial annular groove (14), and the axial thickness of the annular member (11) and the depth of the annular groove (14) are selected such that the thickness is significantly reduced after the surface (7) has been welded to the container (5), owing to the molten material of the annular member (11) yielding laterally in part, but the base of the annular groove (14) still has spacing from the container (5).

4. Part according to any of claims 1 to 3, **characterised in that** the first component (1) comprises a polyolefin, in particular a functionalised PE, which is fusible with the material of the container.

5. Part according to any of claims 1 to 4, **characterised in that** the second component (2) comprises at least one of the materials EVOH, PA, POM, PEN, PBT, PET, PBN, LCP, PPS, PPA, PP, aliphatic polyketone and fluorothermoplastic material.

6. Part according to any of claims 1 to 5, **characterised in that** at least the first component (1) comprises an electrically conductive additive.

7. Part for closing the opening of the container according to any of claims 1 to 6, **characterised in that** the part is largely U-shaped or trapezoidal in cross-section.

8. Part according to claim 7, **characterised in that** at least a further functional member is injection-moulded onto the part, for example a mounting clip.

## Revendications

1. Composant permettant de relier une conduite de fluide à une ouverture (4) d'un récipient (5) constitué principalement d'une matière plastique thermoplastique, en particulier d'une polyoléfine, ou de fermer l'ouverture (4), dans lequel le composant présente au moins un premier et un deuxième constituant (1, 2) principalement formés d'une matière plastique thermoplastique, le matériau du premier constituant (1) établit une liaison de fusion avec le matériau du récipient par soudage, mais ne présente aucune capacité de blocage de diffusion suffisante par rapport aux hydrocarbures, comme l'essence ou le diesel, et le matériau du deuxième constituant (2) a une capacité de blocage de diffusion considérablement plus élevée et une capacité de gonflement plus petite par rapport aux hydrocarbures et une solidité mécanique plus élevée, même après une action des hydrocarbures, ainsi qu'une résistance à la déformation plus élevée à la chaleur que le matériau du premier constituant (1), dans lequel le matériau du deuxième constituant (2) confine le premier constituant (1) au moins jusqu'au premier point d'injection (6) qui est éloigné d'une surface (7) du composant à souder au récipient (5) d'une distance le plus possible grande à une distance la plus grande possible et a été injecté sur le matériau du premier constituant (1) à travers le noyau encore plastique du matériau du deuxième constituant (2) jusqu'à la surface (7) à souder au récipient (5), dans lequel le composant est de forme largement tubulaire et le matériau du premier constituant (1) comble la plus grande partie de la longueur de la paroi tubulaire, dans lequel le matériau du premier constituant (1) s'étend d'une pièce annulaire (11), présentant la surface (7) à souder, du premier constituant (1) jusqu'à l'extrémité (12) du composant de forme tubulaire opposée à cette surface (7), **caractérisé en ce que** le premier constituant (1) inclut un troisième constituant (3) qui permet d'élever au moins l'une des propriétés de solidité, de capacité de blocage de diffusion et de résistance à la déformation à chaud du composant.

2. Composant selon la revendication 1, **caractérisé en ce que** le matériau du premier constituant (1) a été injecté dans une section d'extrémité (9) du composant de forme tubulaire opposée à la surface (7) à souder au récipient.

3. Composant selon la revendication 1 ou la revendication 2, **caractérisé en ce que** la pièce annulaire (11) délimite entre elle et un prolongement coaxial (13) de forme tubulaire du composant une rainure annulaire coaxiale (14) et l'épaisseur axiale de la pièce annulaire (11) et la profondeur de la rainure annulaire (14) sont choisies de sorte que l'épaisseur, après soudage de cette surface (7) au récipient (5), soit, en raison de la fusion de la pièce annulaire (11) qui déborde en partie latéralement, considérablement plus petite, mais que le fond de la rainure annulaire (14) se trouve en outre à une certaine distance du récipient (5).

4. Composant selon l'une quelconque des revendications 1 à 3, **caractérisé en ce que** le premier constituant (1) présente une polyoléfine, en particulier un PE fonctionnalisé, qui peut être fusionnée avec le matériau du récipient.

5. Composant selon l'une quelconque des revendications 1 à 4, **caractérisé en ce que** le deuxième constituant (2) présente au moins un des matériaux suivants : EVOH, PA, POM, PEN, PBT, PET, PBN, LCP, PPS, PPA, PP, une polycétone aliphatique et un matériau thermoplastique fluoré.

6. Composant selon l'une quelconque des revendications 1 à 5, **caractérisé en ce qu'**au moins le premier composant (1) présente un appoint conducteur de l'électricité.

7. Composant pour fermer l'ouverture du récipient selon l'une quelconque des revendications 1 à 6, **caractérisé en ce que** le composant est largement en forme de U ou de trapèze en section transversale.

8. Composant selon la revendication 7, **caractérisé en ce qu'**au moins une autre partie fonctionnelle est injectée sur le composant, par exemple une agrafe de fixation.
